# EUROPEAN PATENT APPLICATION

(11) **EP 4 736 658 A1**
(43) Date of publication of application: **06.05.2026**
(21) Application number: 24210317.4
(22) Date of filing: 31.10.2024
(51) Int. Cl.: A23C 19/055, A23C 20/00, A23C 20/02

(54) **CHEESE AND/OR CHEESE SUBSTITUTE AND METHOD FOR MAKING THE SAME**

(71) Applicant: New Roots AG, 3672 Oberdiessbach (CH)
(72) Inventor: Crespí, Miquel, 3014 Bern (CH); Hunziker, Freddy, 3614 Unterlangenegg (CH)
(74) Representative: Schneiter, Sorin

(57) **Abstract**

The present invention concerns a cheese or cheese substitute comprising proteinogenic matter derived from plant, preferably from lupine seeds. The cheese or cheese substitute further comprises added plant fat. The cheese or cheese substitute is preferably fermented using lactic acid bacteria, yeasts and/or molds. Furthermore, the cheese or cheese substitute is preferably aged, and can be a hard cheese that has aged for more than three months.

## Description

### Technical Field

The present invention relates to cheeses comprising proteins of plant origin, including vegan cheeses and substitute cheeses. The invention also relates to a method for producing the cheeses and/or cheese substitutes, and to the use of lupine in the preparation of cheeses and/or cheese substitutes.

### Background Art and Problems Solved by the Invention

Plant-based substitutes to dairy products have become popular within the last decade, for reasons related to different topics such as consumer's choice, health in general (allergy to milk proteins, lactose intolerance, requirement to reduce cholesterol etc), ecological and ethical considerations in general (CO₂ emissions, the desire to enable sustainable and ethical agriculture), as well as the growing importance of organic practices and animal welfare, for example.

When it comes to plant-based substitutes for cheeses, several challenges become apparent. A first challenge relates to the nutritional value of the plant-based cheese substitute. Cow's and other dairy milk is known to have a rich nutritional profile, encompassing, in particular, a substantial amount of proteins. However, it is important to address the unhealthy fat composition of dairy cheese, which may be high in saturated fats, linked to health risks. It is an objective of the invention to provide a plant-based cheese substitute that provides an amount of proteins and fat that is equivalent and/or close to the amount of these macronutrients in cheese obtained from dairy, obtained from cows, sheep, or other livestock mammals typically used for obtaining dairy. Furthermore, the cheese or cheese substitute of the invention preferably comprises the complete spectrum of amino acids, preferably in a form that can be absorbed by the human digestive tract. Besides the spectrum of amino acids (free or peptide-bound), the presence of other nutritional components, such as a balanced ratio of essential and unsaturated fats, for example, is also relevant.

Another challenge concerns the organoleptic properties, such as taste, texture and mouthfeel. It is an objective of the invention to provide a plant-based cheese substitute (or more generally, a cheese comprising a substantial amount of plant proteins) that provides organoleptic properties as known by the consumer from classical, dairy milk-based cheeses. In this regard, it is desirous to provide a manufacturing method that removes off-tastes and anti-nutritional components present in many plants used for producing dairy substitutes, in particular in seeds or beans of the Leguminosae (legume) family. It is highlighted here that the nutritional profile and the organoleptically properties are linked to some extent.

The present inventors surmise that the generally pleasant and appreciated taste of dairy cheese is at least in part obliged to nutritional components, such as proteins, fats and sugars, that are present in milk that is subjected to fermentation to obtain a cheese, and to the fermentation products thereof. Hence, the present inventors are desirous to provide a plant-based cheese or cheese substitute that contains volatiles and other organoleptically relevant compounds that are present in dairy cheese.

In the publication of Wechsler et al, "Characterisierung von Walliser Raclette GUB", Agroscope Science no. 115/2021, it is explained that, in the case of the Swiss raw milk cheese "Walliser Raclette GUB", free amino acids are the result of the proteolytic activity of the lactic acid bacteria and enzymes from other sources that participate in the fermentation, and that the free amino acids provide taste and taste-enhancing properties and thereby contribute in an important manner to the sensorial perception of the cheese. It is thus an objective of the invention to provide a plant-based cheese that matches or strongly resembles the taste of a mammal-milk-based cheese, in particular also by providing a fermentation that is suitable to provide components relevant for taste, including free amino acids. Mikulec et al, "Flavour formation in cheese", Mlekarstvo 60(4), 2019-227 (2010) also discuss the role free amino acids may have in the development of flavor in dairy cheese.

In this regard, the article cited above specifies that much if not all the peptidase activity takes place after the initial fermentation, during the maturing (also called aging) of the cheese. In other words, an important part of the taste develops during aging. It is an objective of the invention to provide a cheese or cheese substitute that has been aged, and which has a flavor thanks to aging, similar to dairy based, aged cheeses.

A further objective underlying the present invention is related to the infrastructure and/or process characteristics related to the production of a plant-based cheese substitute. A first objective is to produce the cheese substitute under mild conditions, in a manner that is as natural as possible to reduce the environmental impact of the manufacturing. It is the objective to avoid the use of additives, aromas, products of chemical synthesis, starches, hydrocolloids, protein isolates and protein concentrates and chemical modified starches which are often used in plant-based cheese analogs and extensively used in the food industry. It is also the objective to produce the products in compliance with the organic regulation.

The inventors note that, in countries that traditionally produce milk-based cheeses, there is an existing infrastructure, which in some cases is decentralized to some extent, as there are many manufactures of cheeses, including small and medium sized enterprises and farmers. It is an objective of the invention to develop a process of manufacturing a plant-based cheese substitute that can be realized using equipment and infrastructure that is already available, for example using equipment that has traditionally been used for producing traditional dairy milk-based cheese. It is an objective of the invention to enable existing cheese dairies to produce the plant-based cheese substitute of the invention using their existing equipment or requiring only minor adaptations.

In a similar line, it is an objective of the invention to provide a plant-based cheese substitute that relies partially, to a major extent or totally, on plants that can be cultivated in countries that are traditional producers of cheese, mainly in countries of temperate climate zones and possibly in adjacent climatic zones, such as the subpolar and subtropical zones. Consequently, it is an objective of the invention to provide an overall ecologically sustainable and local concept of producing plant-based cheese products, in which a large amount, if not a major part or all plants that provide the ingredients for the cheese substitute can be produced in the comparatively close environment to where the substitute is manufactured. The invention should thus enable all health and environmental benefits of plant-based food compared to animal-based food, and in addition provide the advantages of local cultivation and production. To make an example, a farmer may produce the raw materials for the plant-based cheese substitute and may produce the cheese or substitute using own equipment or bringing the raw materials to a nearby cheese dairy, which can produce the substitute using substantially their traditional equipment.

It is a particular objective to address the above challenges and objectives in a plant-based hard, semi hard or soft cheese substitute.

It is a further objective to address the above challenges and objectives in a plant-based hard cheese substitute based on lupine, lupine proteins or comprising a substantial or amount of lupine proteins, or preferably in which proteinogenic matter is to 10wt% or more of lupine origin.

The following patent documents relate to plant-based products, including, in some cases, cheese substitutes.

US 11,730182 discloses a method for producing an emulsion that contains lupine protein and fat, wherein the emulsion contains less than 2.5% of γ-conglutine in the protein fraction, and which may be used in food products such as lupine pudding, lupine yoghurt or lupine fresh cheese. This document does not disclose the manufacturing of a plant-based substitute of a hard cheese.

US 2022/0338497 discloses a cultured plant-based cheese composition from soy beans, wherein the natural rind is either not desired for aged cheese, or the cheese is bandaged or otherwise coated to avoid the growth of unwanted molds. The rind of an aged cheese is ultimately removed as it is considered distasteful, for example when producing a melting cheese from the hard cheese. The hard cheese in this document is not comparable to a hard cheese from dairy.

US10986848B2 discloses a ricotta cheese replica based on solidified nut milk. Without assessing the taste of this cheese, it is clear that the proteinogenic fraction cannot be compared to that of dairy cheese in terms of quantity and amino acid profile.

US9011949B2 mainly discloses cheese replicas obtained from nut milk, for which the same can be said as with respect to US10986848. Some cheeses were made with emulsions of purified pea albumins, pea globulins and moong bean globulins in a laboratory setting in reaction tubes. These cheeses were produced with very high amounts of transglutaminase to form gels and were not aged as typical semi-hard or hard cheeses.

WO2022/243635A1 discloses a soft cheese ("fromage à pâte molle") based on a legume milk, which is generally a pea protein isolate.

US2015305361 discloses non-dairy cheese replica comprising a coacervate comprising one or more isolated and purified proteins from a non-animal source. Non-dairy hard cheese replica that may be aged using *Brevibacterium linens* are mentioned. While examples prepared from pasteurized almond and macadamia nut milk are concerned, legumes such as pea protein and lupins are mentioned as plant sources. Examples 19 and 33 mention hard cheeses, which seem to be made using isolated plant proteins. This document is not concerned with the nutritional value of the cheese replica.

EP2112888 discloses a protein preparation that is based on lupine proteins but does not disclose the preparation of a plant-based cheese involving fermentation.

EP1560501 discloses a protein preparation comprising at least 60% proteins of plant origin with a very low fat content, and the fermentation of the protein isolated with a lactic acid bacterium, in order to obtain a (dairy-) milk-like aroma corresponding to a diacetyl content of at least 0.5 wt%.

EP0859553 discloses a two-step, water-based extraction method for removing undesired aroma and plant components from lupines.

### Summary of the Invention

In an aspect, the invention provides a cheese or cheese substitute comprising a proteinogenic content comprising free amino acids, and a fat content, wherein 10 wt.% or more of said proteinogenic content is derived from plant protein and/or is plant-based proteinogenic content. In a preferred embodiment, 20 wt.% or more, 30wt% or more, 40wt% or more, 50wt% or more, 60wt% or more said proteinogenic content is plant or plant-based proteinogenic content and/or derived from plant protein, preferably from legume seeds, most preferably from lupine.

In further preferred embodiments 70 wt.% or more, 80wt% or more, 90wt% or more, 95wt% or more, 97wt% or more said proteinogenic content is plant or plant-based proteinogenic content and/or derived from plant protein, for example from legume protein and/or seeds, preferably from lupine, in particular protein of lupine and/or of lupine seeds.

In an embodiment, said cheese or cheese substitute comprises an aged rind comprising live microorganisms.

In an aspect, the invention provides a method for producing a cheese or cheese substitute comprising a proteinogenic content of which 10 wt.% or more is provided by plant protein, preferably from lupine, the method comprising:
- providing a liquid comprising an aqueous extract of one or more plant material, wherein said liquid comprises a proteinogenic content of 10 wt.% or more of the dry matter of said liquid and further comprises plant fat;
- obtaining a coagulate of said liquid and fermenting said coagulate by exposing the coagulate to one or more live microorganisms and/or enzymes, wherein said microorganisms are selected from lactic acid bacteria, yeast and/or molds;
- forming bodies of said cheese or substitute cheese form said coagulate.

In an embodiment, the invention provides cheeses and cheese substitutes obtained by the method of the invention.

In an embodiment, the method comprises aging said bodies by repeatedly and/or continuously exposing at least part of an outer surface of said bodies to live microorganisms and storing said bodies in conditions suitable to prevent drying out of said bodies, thereby obtaining said cheese or cheese substitute.

Preferably, the cheese of the invention and/or said bodies are aged for three months or longer, preferably 4 months or longer, 6 months or longer and 7 months or longer. In an embodiment, the bodies are aged for up to 24 months, preferably up to 12 months.

In an embodiment, the proteinogenic content and/or said plant protein comprises lupine protein and/or lupine proteinogenic content, and/or wherein said proteinogenic content is at least 50 wt.%, preferably at least 70 %, more preferably at least 80%, at least 90 %, and most preferably at least 95 % lupine proteinogenic content and/or proteinogenic content derived from lupine protein.

Remarkably, the invention and its embodiments provide a substantially plant-based cheese or cheese substitute that reproduces interesting and relevant aspects of traditional dairy cheeses, in terms of the external aspect, the rind, flavor, texture and other or overall organoleptic properties

Surprisingly, the invention and its embodiments provide a substantially plant-based cheese or cheese substitute comprises several free amino acids at specified quantities so as to reproduce flavor, texture and other or overall organoleptic properties of dairy cheeses.

In particular, the invention and its embodiments provide a substantially plant-based cheese or cheese substitute that provides the organoleptic properties that are typically associated with aged dairy cheeses.

In preferred embodiments, the present invention achieves the replacement of dairy milk with a plant-based substitute derived, in some preferred embodiments, from a single or main protein source, maintaining the functional and/or nutritional properties of cow milk at least to a relevant extent. The invention allows the use of existing dairy infrastructure and preserves traditional cheese-making practices with a more sustainable approach. Lupin varieties, for example, are grown in temperate zones including many traditional cheese making countries such as France, Italy, Germany and Switzerland, the invention thus closing the entire value chain from farm to production and offering farmers an alternative to cow milk.

Embodiments of the present invention may revolutionize the cheese industry and provide the food of the future, by offering vital qualities and meeting essential criteria, such as: taste, texture, price efficiency, protein including essential amino acids for an optimal human health, a balanced ratio of saturated and unsaturated fats, and a product that eliminates the negative aspects associated with traditional dairy production, such as environmental impact, ethical consideration, cholesterol, lactose, antibiotics and hormones. Some embodiments of the invention provide a new approach and supply chain that can be maintained without the use of any subsidies, bringing farmers an attractive and new independent income, by cutting out the animal as a middle man, and taking directly the protein source from the plant.

In accordance with embodiments of the invention, plant-based proteinogenic matter, in particular from lupine proteins, are used in combination with microorganisms to develop an entire new category of preferably plant-based cheeses, be it hard, semi-hard and soft cheeses, like Camembert, Gruyere, Emmental, and Roquefort, just to mention a few, capturing their unique smell, taste, and texture. The cheeses of the invention can have at the same time uniqueness due to their own characteristics, and at the same time be the substitutes of classical and well-known dairy-based cheeses, such as those mentioned above, for example.

In accordance with embodiments of the invention, the invention utilizes plant-based raw material, which may include lupin, as an ingredient from an in-house supply chain, adhering to traditional cheesemaking methods, by removing ethical concerns and cutting down tremendously on CO₂ release into the atmosphere, land and water usage.

Further and preferred embodiments of the invention are defined herein below and in the appended claims. Further features and advantages of the invention will become apparent to the skilled person from the description of the preferred embodiments given below.

### Brief Description of the Drawings

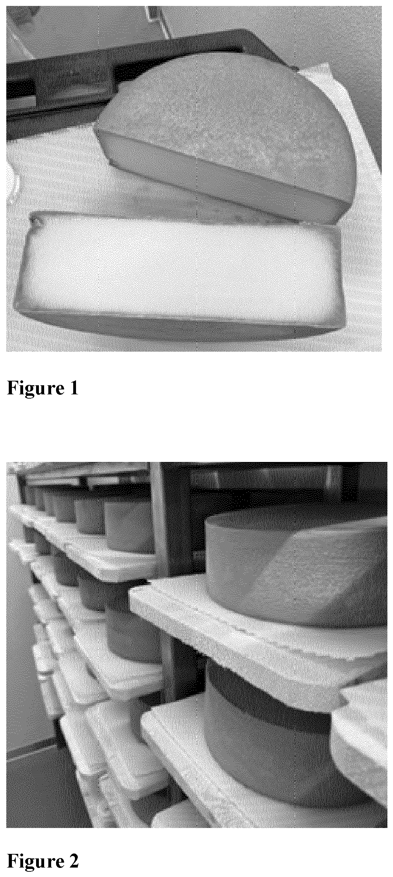

**Figure 1** shows a semi hard cheese according to a first embodiment of the invention.
**Figure 2** shows storage of a semi hard cheese using traditional (dairy cheese) storing equipment.

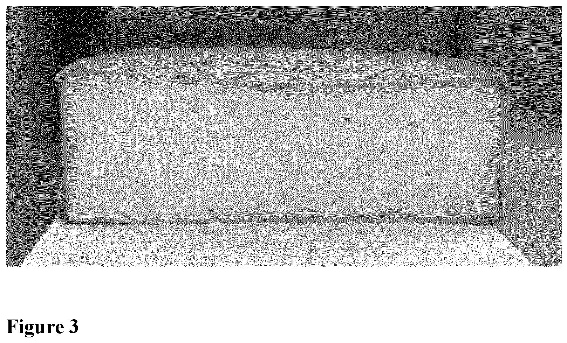

**Figure 3** shows a closer view to the cut portion of the cheese shown in Figure 1.

Hereinafter, preferred embodiments of the device of the invention are described, in order to illustrate the invention, without any intention to limit the scope of the present invention.

### Detailed Description of the Preferred Embodiments

The present invention relates to cheese and/or cheese substitutes. Another term that is used to refer to this type of product is cheese replicates. While traditionally the term "cheese" refers to dairy-based products, the term is used in this specification to refer to the products of the present invention, which comprise a proteinogenic and/or fat content that is plant based and which is even entirely plant-based in some preferred embodiments. In some embodiments, the present invention preferably uses technology, methodology and microorganisms used typically used in dairy cheese manufacturing for obtaining a product ("cheese") that has plant based proteinogenic and/or fat content but which closely resembles dairy-based cheeses in terms of organoleptic, optic and physical properties, such as product aspect, taste, and mouthfeel, for example.

In some embodiments, the cheese of the invention is a hard cheese or a semi-hard cheese or cheese substitute. In some embodiments, the cheese of the invention is a soft cheese.

In the present specification, reference to "dairy" refers to animal milk-based products, including milk and cheeses obtained from livestock such as cow, goat, sheep, camel, or other mammals, for example.

In a preferred embodiment, the cheese of the invention is a vegan cheese or a vegan substitute for a dairy cheese. Preferably, the cheese is entirely plant based.

Preferably, the cheese of the invention is free from any dairy content, mammal-based content and generally from animal-based nutritional content, preferably except some possibly present minor or trace amounts, which may have been incorporated into the cheese as being present in the plant material that was used for producing the cheese. In some embodiments, the cheese contains less than 1wt%, less than 0.5wt%, even more preferably less than 0. 1wt%, for example 0wt% or non-detectable amounts of animal-based nutritional content, such as animal fat or animal protein.

Percentages used in the present specification are generally percent by weight (wt), unless otherwise indicated. Furthermore, percentages generally refer to the overall weight of the cheese including water, unless otherwise indicated. As the cheese of the invention may have preferred characteristics related to its water content, some percentages specifically refer to percentage of the dry matter of the cheese. Also, given preferred water/dry matter contents, the percentage with respect to the dry matter may generally be determined from the percentages related to the overall weight and taking the water/dry matter content into account.

In other embodiments, the invention does not entirely exclude the presence of components of animal origin, including dairy milk, such as cow, sheep, goat or buffalo milk, or amino acids of animal origin. In such embodiments, the proteins and other ingredients of animal origin preferably provide less than 75wt%, less than 50wt%, more preferably less than 30wt%, even more preferably less than 20wt%, and most preferably less than 10wt% of the total dry matter of the substitute cheese. In most preferred embodiments, the proteins and other ingredients of animal origin preferably provide less than 5wt%, 4wt%, 3wt%, 2wt% and 1wt% of the cheese.

In an embodiment, the cheese of the invention comprises or consists essentially of plant protein, plant-derived protein and/or plant proteinogenic content, and fat, in particular plant fat. It is noted herein that the expressions "fat" includes oils and "plant fat" and "vegetal fat" includes "plant oils", which means oils and fats of plant origin.

The cheese of the invention comprises a proteinogenic content obtained and/or derived from plants.

The invention encompasses proteinogenic content obtained from, derived from and or originating from particular seeds and/or beans of the legume family, hemp seeds, pumpkin seeds, melon seeds, nuts, for example. In some embodiments, said seeds are whole seeds.

Preferably to a major part of plants of the legume family, in particular seeds and/or beans of the legume family. It is noted here that fungi, such as yeast or molds, algae and bacterial proteins are included in the reference to "plant-based" or the "proteinogenic content obtained and/or derived from plants" for the purpose of the present invention. In other embodiments, said plants are angiosperms.

In some embodiments, the proteinogenic content includes content of and/or produced or released by microorganisms that are used for fermenting and/or ripening to obtain the cheese in accordance with the invention. The microorganism may produce new proteins, including enzymes, based on nutrients provided by at least the plants, thereby affecting the amino acid profile in the final cheese.

In an embodiment, the plants of the legume family are lupine, soy, pea, fava bean, lentil, chickpea, peanut, cannellini bean, navy bean, and pinto, and the invention encompasses proteinogenic content based and/or derived from any one or a combination of several of the aforementioned, and also other protein sources from other plants.

In an embodiment, proteinogenic content of legumes, for example of lupine, provide 40wt% or more, 50 wt.% or more, 60wt% preferably 70wt% or more, 80wt% or more, more preferably 90wt% or more, and most preferably 95wt% or more of the proteinogenic content of the cheese, preferably of the plant-based proteinogenic content of the cheese.

In an embodiment, 20 wt.% or more, 30wt% or more, 40wt% or more, 50wt% or more, 60wt% or more of said proteinogenic content is derived from and/or based on lupine proteins, in particular of proteins contained in lupine seeds.

In a preferred embodiment, a single legume family source of protein is used for providing proteinogenic content of the cheese. Preferably, said source of protein is lupine material, preferably lupine seeds, in particular whole seed lupine protein.

In a preferred embodiment, whole grain lupine seeds are used for providing some or all of the proteinogenic content of the cheese. In other words, the original proteinogenic content comprises all proteinogenic protein present in lupine seeds, or is derived, in particular by fermentation, from all proteinogenic content present in whole lupine seed. Preferably, the proteinogenic content does not contain a fraction only of some of the proteins of lupine seeds. For example, the invention does not comprise selectively extracting and/or removing some of the proteins present in lupine seeds. This is contrary to, for example, US 11,730182, which discloses an emulsion containing less than 2.5% of γ-conglutine, or other preparations using an particular protein isolated from lupine or another plant source.

In an embodiment, the cheese comprises a main or major proteinogenic content which is based on lupine, and which is preferably whole seed lupine protein, subjected to fermentation as disclosed herein.

Lupine is considered a plant the growth of which is favored in temperate climate as present in many traditionally dairy cheese producing countries, such as European countries such as Switzerland, France, and Italy, for example.

The present invention does not exclude the presence of other sources of proteins, preferably plant-based proteins and also proteins from animal origin, such as from dairy origin, for providing at least part of said proteinogenic content. In a preferred embodiment, the cheese of the invention only contains non-animal protein. Other plant-based proteins may be from for example, nuts, such as cashew, peanut, coconut, hazelnut, almond, or other nuts (e.g. walnut, pecan, chestnuts, macadamia, pistachio, pine nuts, brazil nuts, baru nuts); or other plant based proteins, for example proteins of seeds of Gramineae (poaceae), such as rice, wheat, oat, corn, barley, sorghum, millet; protein from hemp; proteins from fungi, or other plant based proteins. Proteins may also be yeast, mould and fungi proteins, for example produced by fermentation and/or biotechnological processes. In some embodiments, plant materials may be used for providing several macronutrients, such as proteinogenic content, carbohydrates and fat in the cheese of the invention. For example, nuts may provide proteinogenic content and plant fat.

In an embodiment of the cheese, said proteinogenic content provides 8-40 wt.%, preferably 10-35 wt%, more preferably 12-33 wt%, and most preferably 15-28 wt% of said cheese, including water.

In percent by weight of dry matter, the proteinogenic content provides 25-70wt%, preferably 30-65wt%, more preferably 35-60wt%, and most preferably 34-55wt% of the dry weight of the cheese.

From an exemplary dry matter content of 45% (e.g. 50% in an exemplary hard and 45wt% in an exemplary semi hard cheese), the proteinogenic content in the dry matter can also be calculated from the ranges given above concerning the proteinogenic content in the overall cheese. Preferred dry-matter contents of the cheese of the invention are disclosed elsewhere in this specification.

The cheese of the invention preferably comprises plant fat and optionally also comprises animal fat, for example from dairy milk, in case dairy milk is included when producing the cheese of the invention. Preferably, however, the added fat is plant fat. Preferably, fat is added so as to provide a fat supplemented and/or fat standardized cheese. Generally, the cheese of the invention is fat and/or protein standardized in that it is comparable and/or equal with respect to the overall fat and proteinogenic content of dairy cheeses. In an embodiment, plant fat may comprise one or more fats selected from corn oil, soybean oil, sunflower oil, coconut oil, canola oil, palm oil, palm kernel oil, rice bran oil, safflower oil, peanut oil, olive oil, cocoa oil, walnut oil, and cottonseed oil or lupine fat extracted and isolated from the lupin beans by producing a cheese only from one single ingredient.

In a preferred embodiment, the plant fat comprises or consists essentially of one or more selected from rapeseed oil, coconut oil, sunflower oil, shea oil (or butter), and pumpkin oil.

In a preferred embodiment, the cheese or cheese substitute comprises essential fatty acids, in particular Omega-3 and Omega-6 fatty acids. In an embodiment, 10wt% or more of the fatty acids of the fat of the cheese are unsaturated and/or polyunsaturated fatty acids.

It is noted that the cheese obtained in accordance with preferred embodiments of the also develops free fatty acids, facilitated by the action of natural enzymes during fermentation and ripening. Such fatty acids generally also contribute to the enhancement of flavor, imparting distinct characteristics such as pungency or slight rancidity, which enrich the overall taste profile of the cheese.

In an embodiment, the fat content provides 10-50wt%, preferably 15-45wt%, even more preferably 20-40wt%, and most preferably 20-35wt% of the cheese or cheese substitute.

In percent by weight of dry matter, the fat content provides preferably 20-90wt%, preferably 30-80wt%, more preferably 40-70wt% and most preferably 50-60wt% of the dry matter of the cheese.

Assuming a dry matter content of 45wt%, the percentages of the fat content with respect to dry matter can also be calculated based on the fat content in the overall cheese.

For example, 10-40wt% of fat in the overall cheese corresponds to about 22-90wt% fat of the dry matter of the cheese.

In some embodiments, in case of a hard cheese, the dry matter content is preferably about 47wt%, and in case of a semi hard cheese the dry matter content is preferably about 43wt%.

In an embodiment, the hard cheese has a fat content of 22-40g/100g, preferably 23-38g and most preferably 24-35g/100g of cheese.

In an embodiment, the semi hard cheese has a fat content of 21-34g/100g, preferably 22-32g and most preferably 23-30g/100g of cheese.

In an embodiment, said fat content comprises 70 wt.%, preferably 80 wt.% or more and most preferably 90 wt.%, for example 95wt%, 97, 98, 99wt% or more of plant oil or fat. Preferably, the cheese should not contain and/or is free of added fat of animal source. In an embodiment the cheese is made using plant based proteins preferably from lupins in combination with animal fat such as sheep, goat or cow.

The cheese of the invention comprises a proteinogenic content. Preferably, the proteinogenic content comprises free amino acids. A "free amino acid", such as "free glutamic acid", or an "amino acid in free form" is an amino acid that is preferably not bound to another proteinogenic amino acid by way of one or two peptide bonds. The expression "proteinogenic content" is used herein to include free amino acids, peptides, oligopeptides, polypeptides and proteins, wherein all said proteinogenic content can preferably be decomposed into various compounds including amino acids in the form of (L-stereoisomers) free amino acids, and more preferably into proteinogenic amino acids, in particular the 20 proteinogenic amino acids of the standard genetic code (thus excluding selenocysteine and pyrrolysine). In a preferred embodiment, the expression "free amino acids" referred to with respect to the "proteinogenic content" include or consist essentially of the following 20 amino acids: tryptophan, threonine, isoleucine, leucine, lysine, methionine, phenylalanine, tyrosine, valine, arginine, histidine, alanine, aspartic acid, glutamic acid, glycine, proline, serine, cysteine, glutamine and asparagine encoded by the standard genetic code.

Without wishing to be bound by theory, the present inventors consider it to be an advantage that the proteinogenic content of the cheese of the invention comprises free amino acids. This is due to the impact of certain amino acids on the organoleptic properties in cheeses, and in particular as generally reported for aged dairy cheeses. Free amino acids may be obtained by the method of the invention, which involves specific fermentation and aging of cheese bodies using live microorganisms. Preferably, the amounts of free amino acids are obtained by processing and/or fermenting as disclosed, preferably by biotechnological means, and are not the result and/or obtained by adding free amino acids as additives.

A high content of certain free amino acids is further indicative for, or favors, the occurrence of flavor compounds that are the degradation, fermentation and/or metabolic products of these free amino acids. Preferred free amino acids present in the cheese of the invention are disclosed in this specification.

In an embodiment, the proteinogenic matter in the cheese of the invention comprises amino acids in protein- or peptide-bound form as well as in the form of free amino acids. Amino acids mentioned herein are proteinogenic unless otherwise indicated or clear from the context.

In an embodiment, the cheese of the invention comprises free amino acids at an amount of 5 to 400 g per kg of said cheese, preferably 7-300 g, more preferably 8-200 g, even more preferably 9-160 g, and most preferably 10-100g per per kg of the cheese.

Preferably, the cheese of the invention comprises 7 g or more, more preferably 8 g or more, even more preferably 9 g or more, and most preferably 11.5 g or more of free amino acids per kg of said cheese.

The invention envisages high amounts of free amino acids, especially for cheeses that are stored for longer times, such as more than 3, 4, 5, 6, 7, 8 or more than 9 months.

Amounts of free amino acids can thus be up to 400 g per kg of the cheese, preferably up to 300 g, more preferably up to 200 g, and most preferably up to 100 g per kg of the cheese.

In a preferred embodiment, the cheese comprises 30-80g, preferably 40-70g, and most preferably 50-60g of free amino acids per kg of cheese.

In an embodiment, said free amino acids provide at least 4.0 wt% of said proteinogenic content, preferably at least 4.5 wt%, more preferably at least 5.0 wt% or more, and most preferably 5.5 wt% or more of said proteinogenic content.

In further preferred embodiments, 6.0wt% or more of the amino acids are present in free form, most preferably 6.5wt% or more.

In some embodiments, said free amino acids may provide up to 25wt%, preferably up to 20wt%, even more preferably up to 15wt% and most preferably up to 10wt% of said proteinogenic content. In particular, in hard cheeses aged for up to 6 months or longer, the proteinogenic content provided by free amino acids may be comparatively higher, as the aging generally favors the occurrence of free amino acids.

Preferably, the cheese comprises selected free amino acids in preferred amounts. Some amino acids are preferably present in free form as they have a beneficial effect on organoleptic properties, while others are preferably present in protein-bound form only, meaning that the release of these amino acids in free form is not preferred. For example, free glutamic acid is supposed to be flavor enhancing. Aromatic amino acids, in particular phenylalanine and tyrosine, are believed to be at the origin of interesting flavor compounds. The same applies to amino acids comprising a branched aliphatic side chain, in particular isoleucine, leucine and valine. The present inventors believe free proline also to contributes to an advantageous, dairy-cheese like flavor and/or mouth feel in general. Surprisingly, the inventors found the aforementioned amino acids to be present in free form in the cheese of the invention. It is noted that some amino acids are also further degraded into volatiles that contribute to the flavor and taste of the cheese.

The profile of free amino acids is determined by several factors, such as the choice of the protein source and of the fermenting microorganism. The latter term includes not only lactic acid bacteria, but may include other bacteria, molds and yeast. These microorganisms contain and release enzymes, in particular proteases, that favor the occurrence of certain amino acids in free form. An amino acid that is not desired in its free form is histidine, as it may be metabolized to histamine, as disclosed in Grabowska et al, "Contents of Functionally Bioactive Peptides, Free Amino Acids, and Biogenic Amines in Dutch-Type Cheese Models Produced with Different Lactobacilli", Molecules 2020, 25(22), 5465. Also other free amino acids, such as lysine, may be less desired.

In an embodiment, the cheese of the invention comprises branched-chain amino acids, such as isoleucine, leucine and valine, in free form. In an embodiment, the quantity of all branched chain amino acids together in free form, is ≥1'500 mg/kg (this unit refer to mg per kg of the cheese of the invention, including water), more preferably ≥2'500, even more preferably ≥3'000, and most ≥3'400 mg/kg. Preferably, these quantities refer specifically to the quantities of isoleucine, leucine and valine taken together, meaning the sum of the amounts of these three amino acids in free form.

In this specification, the sign "≥" means the amount (or quantity, size, etc.) indicated behind (or after) the sign or more, such that the indicated amount is a minimum amount, whereas the sign "≤" means the amount indicated behind or after the sign or less, such that the amount is a maximum amount.

The quantity of amino acids in free form may be determined by any suitable methodology. In the present examples, the quantities in mg/kg of cheese were determined using standard operating procedures (SOP) M 3123, which is a standardized procedure for determining amino acids in foodstuff by Liquid Chromatography-Tandem Mass Spectrometry (LC-MS/MS).

In an embodiment, the cheese of the invention comprises aromatic amino acids, such as phenylalanine and tyrosine, in free form. In an embodiment, the quantity of all aromatic amino acids together in free form, is ≥800 mg/kg, more preferably ≥900, even more preferably ≥1'000, and most preferably ≥1'400 mg/kg. Preferably, these quantities refer specifically to the quantities of phenylalanine and tyrosine taken together (summed-up).

In an embodiment, the cheese comprises one or more selected from glutamic acid, leucine, and isoleucine in free form preferably at the quantities specified in this specification (respectively for Glu, Leu, Ile: ≥1'000 mg/kg etc., ≥800 mg/kg etc., and ≥500 mg/kg etc.). Preferably, the cheese comprises all three aforementioned amino acids in free form, preferably at quantities indicated above. The word "etc." refers to preferred amounts as disclosed herein.

In an embodiment, the cheese comprises one or more selected from phenylalanine, valine, and proline in free form preferably at the quantities specified in this specification (respectivelyfor Phe, Val, and Pro: ≥450 mg/kg etc., ≥400 mg/kg etc., and ≥ 400 mg/kg etc.). Preferably, the cheese comprises all three aforementioned amino acids in free form, preferably at quantities indicated below.

In an embodiment, the cheese comprises one or more selected from glutamic acid, leucine, isoleucine, phenylalanine, valine, and proline in free form preferably at the quantities specified in this specification (respectively for Glu, Leu, Ile, Phe, Val and Pro: ≥1'000 mg/kg etc., ≥800 mg/kg etc., ≥500 mg/kg etc., ≥ 450mg/kg etc., ≥ 400mg/kg etc., and ≥ 400mg/kg etc.). Preferably, the cheese comprises all six aforementioned amino acids in free form, preferably at quantities indicated below.

In an embodiment, the cheese comprises one or more selected from glutamic acid, leucine, isoleucine, phenylalanine, valine, proline and tyrosine in free form preferably at the quantities specified in this specification (respectively ≥1'000 mg/kg etc., ≥800 mg/kg etc., ≥500 mg/kg etc., ≥450 mg/kg etc., ≥400 mg/kg etc., ≥400 mg/kg etc., and ≥300 mg/kg etc.). Preferably, the cheese comprises all seven aforementioned amino acids in free form, preferably at quantities indicated below.

In an embodiment, the cheese of the invention comprises glutamic acid and one or more selected from aromatic amino acids and/or branched chain amino acids, preferably at the quantities specified herein above and/or herein below.

In an embodiment, the cheese of the invention comprises free glutamic acid and one or more selected from free leucine, free isoleucine and free valine, preferably at the quantities specified herein below (respectively, ≥ 1'000 mg/kg etc., ≥ 800 mg/kg etc., ≥ 500 mg/kg etc., ≥ 400 mg/kg etc.).

In an embodiment, the cheese of the invention comprises free glutamic acid and one or more selected from free phenylalanine and free tyrosine, preferably at the quantities specified herein below (respectively, ≥ 1'000 mg/kg etc., ≥ 450 mg/kg etc., ≥ 300 mg/kg etc.).

In an embodiment, the cheese of the invention comprises glutamic acid and one or more selected from leucine, isoleucine and phenylalanine, all in free form preferably at the quantities specified herein below (respectively, ≥ 1'000 mg/kg etc., ≥ 800 mg/kg etc., ≥ 500 mg/kg etc., ≥ 450 mg/kg etc.,). In an embodiment, the cheese of the invention further comprises one or more selected from free proline, valine and tyrosine preferably at the quantities specified herein below (respectively, ≥ 400 mg/kg etc., ≥ 400 mg/kg etc., ≥ 300 mg/kg etc.).

In an embodiment, the quantity of glutamic acid, leucine, isoleucine, and phenylalanine, all in free form and all together (summed up), is preferably ≥4'500 mg/kg, more preferably ≥5'000, even more preferably ≥5'500, and most preferably ≥6'000 mg/kg.

In an embodiment, the cheese comprises free glutamic acid. In an embodiment, the cheese comprises 1'000 mg/kg or more, preferably 1'500 mg/kg or more, more preferably 2'000 mg/kg, even more preferably 2'400mg/kg or more, and most preferably 2'600 mg/kg or more of free glutamic acid. According to a preferred example, the cheese comprises 2'800 mg/kg or more of free glutamic acid.

In some embodiments, the cheese comprises less than 10'000 mg/kg and preferably less than 7'000mg/kg of free glutamic acid.

In a preferred embodiment, 3.5 wt% or more, preferably 4wt% or more, more preferably 5wt% or more, and most preferably 6.5wt% or more of all glutamic acid of the cheese is present in the form of a free amino acid (free glutamic acid). In an embodiment, up to 30wt%, preferably up to 25wt% of glutamic acid is present in the form of free glutamic acid.

In an embodiment, the cheese comprises free leucine. In an embodiment, the cheese comprises 800 mg/kg or more, preferably 900 mg/kg or more, more preferably 1'400 mg/kg or more and most preferably 1'500 mg/kg or more of free leucine. According to a preferred example, the cheese comprises 1'800 mg/kg or more of free leucine.

In an embodiment, the cheese comprises 7'000 mg/kg or less, preferably 6'000 mg/kg or less of free leucine.

In an embodiment, 6wt% or more of all leucine, preferably 8% or more, more preferably 10% or more and most preferably 11wt% or more of leucine in the cheese is present in the form of a free amino acid. Preferably, up to 35wt%, more preferably up to 30wt% of leucine in the cheese is present in the form of free leucine.

In an embodiment, the cheese comprises free isoleucine. In an embodiment, the cheese comprises 500 mg/kg or more, preferably 600 mg/kg or more, more preferably 700 mg/kg or more and most preferably 800 mg/kg or more, for example 900 mg/kg or more. In a particular example, the cheese comprises 1'000 mg/kg or more of free isoleucine.

In an embodiment, the cheese comprises 5'000 mg/kg or less, preferably 4'400 mg/kg or less of free isoleucine.

In an embodiment, 6wt% or more of all isoleucine, preferably 8wt% or more, more preferably 10% or more and most preferably 11wt% or more of isoleucine in the cheese is present in the form of a free amino acid. Preferably, up to 30wt%, more preferably up to 25wt% of isoleucine in the cheese is present in the form of free isoleucine.

In an embodiment, the cheese of the invention comprises free valine. In an embodiment, the cheese comprises 400 mg/kg or more, preferably 500 mg/kg or more, more preferably 600 mg/kg or more, even more preferably 650 mg/kg or more, and most preferably 700 mg/kg or more of free valine. According to a preferred example, the cheese comprises 800mg/kg or more of free valine.

In an embodiment, the cheese comprises 3'500 mg/or less, preferably 2'500 mg/kg or less of free valine.

In an embodiment, 5wt% or more of all valine, preferably 6% or more, more preferably 7% or more and most preferably 8wt% or more of valine in the cheese is present in the form of a free amino acid. Preferably, up to 35wt%, more preferably up to 25wt% of valine is present as free valine.

In an embodiment, the cheese comprises 450 mg/kg or more, preferably 500 mg/kg or more, more preferably 600 mg/kg, even more preferably 700 mg/kg or more, and most preferably 800 mg/kg of free phenylalanine. According to a preferred example, the cheese comprises 900 mg/kg or more of free phenylalanine.

In some embodiments, the cheese comprises less than 5'000 mg/kg and preferably less than 3'000 mg/kg of free phenylalanine.

In a preferred embodiment, 5.5wt% or more, preferably 7wt% or more, more preferably 8wt% or more, and most preferably 10wt% or more of all phenylalanine of the cheese is present in the form of a free amino acid (free phenylalanine). For example, up to 35wt% of phenylalanine is present in the form of free phenylalanine.

In an embodiment, the cheese comprises free tyrosine. In an embodiment, the cheese comprises 300 mg/kg or more, preferably 350 mg/kg or more, more preferably 400 mg/kg, even more preferably 500 mg/kg or more, and most preferably 550 mg/kg or more of free tyrosine. According to a preferred example, the cheese comprises 600 mg/kg or more of free tyrosine.

In some embodiments, the cheese comprises less than 3500 mg/kg and preferably less than 2500 mg/kg of free tyrosine.

In a preferred embodiment, 3.5wt% or more, preferably 4wt% or more, more preferably 5wt% or more, and most preferably 6.5wt% or more of all tyrosine of the cheese is present in the form of a free amino acid (free tyrosine). For example, up to 30wt% of tyrosine is present in the form of free tyrosine.

In an embodiment, the cheese comprises free proline. In an embodiment, the cheese comprises 400mg/kg or more, preferably 450 mg/kg or more, more preferably 500 mg/kg, even more preferably 600 mg/kg or more, and most preferably 700 mg/kg or more of free proline. According to a preferred example, the cheese comprises 800 mg/kg or more of free proline.

In some embodiments, the cheese comprises less than 3'500 mg/kg and preferably less than 2'500mg/kg of free proline.

In a preferred embodiment, 5 wt% or more, preferably 6wt% or more, more preferably 7wt% or more, and most preferably 8wt% or more of all proline of the cheese is present in the form of a free amino acid (free proline). For example, up to 35wt% of proline is present in the form of free proline.

In an embodiment, the cheese comprises one or more free amino acids selected independently from one or more selected from: glutamic acid, leucine, isoleucine, and further selected independently preferably one or more of phenylalanine, valine, and proline, and more preferably also tyrosine, and even more further preferably one or more other amino acids in free form selected independently from the amino acids indicated below at the following amounts (mg/kg):
Isoleucine: ≥ 550 mg/kg, and preferred embodiments disclosed herein.
Leucine: ≥ 800 mg/kg, and preferred embodiments disclosed herein.
Lysine: ≥ 100 mg/kg
Phenylalanine: ≥ 500 mg/kg, and preferred embodiments disclosed herein.
Tyrosine: ≥ 300 mg/kg, and preferred embodiments disclosed herein.
Valine: ≥ 450 mg/kg, and preferred embodiments disclosed herein.
Histidine: ≤ 700 mg/kg, preferably ≤ 500 mg/kg, most preferably ≤ 300 mg/kg.
Alanine: ≥ 500 mg/kg.
Aspartic acid: ≥ 500 mg/kg.
Asparagine: ≤ 100 mg/kg, preferably ≤ 200 mg/kg.
Glutamic acid: ≥ 1'000mg/kg
Glutamine: ≥ 500 mg/kg, (at the same preferred amounts as phenylalanine).
Glycine: ≥ 300 mg/kg (at the same preferred amounts as tyrosine)
Proline: ≥ 400 mg/kg, and preferred embodiments disclosed herein.

It is noted that free tryptophan, threonine, lysine, arginine, histidine, serine, methionine, and cysteine are not mentioned or are mentioned by way of comparatively low maximum amounts above, and one or more of these amino acids may be present in free form in non-detectable amounts or may be absent, for example. It is also envisaged that the free form of some of these amino acids are not adequately detected by the methodology used, such that these amino acids may be present in higher amounts.

In an embodiment, the cheese of the invention comprises dietary fiber. The cheese of the invention may comprise fiber originating from some plant materials that are used for preparing the cheese, and which has not been removed, for example by sieving. As fiber has a beneficial effect on health, some fiber presence is generally welcomed or tolerated, even though dairy cheese does not contain fiber. In an embodiment, the cheese comprises 1wt%, preferably 2% or more of dietary fiber. In an embodiment, the cheese comprises 10wt% or less, preferably 7% or less, and most preferably 5% or less of dietary fiber.

In an embodiment, the dry-matter content of said cheese is 55wt% or lower, more preferably 54wt%, 53wt%, 52wt%, or 51wt% or lower. The water content of the cheese can be determined as being the complement of these percentages to 100%. For example, the cheese has preferably a water content of 45wt% or higher, more preferably 46wt%, 47wt%, 48wt%, etc, or higher.

In a preferred embodiment, the dry-matter content is 50% or lower, preferably 49% or lower, even more preferably 47% or lower, and most preferably 46wt% or lower.

In an embodiment, the dry matter content of the cheese is generally in the range of 35-55wt%, preferably 40-50wt%, more preferably example 41-49wt%, and most preferably 42-48wt%.

The dry matter content generally increases with aging. Hard cheeses have generally been aged for 3 months or longer, while semi-hard cheeses have been aged for more than one month and up to 3 months.

In an embodiment, the cheese of the invention has a dry matter content of 45% or more and/or has been aged for 3 months or more. This preferably applies to a hard cheese.

In an embodiment, the cheese of the invention has a dry matter content of 45% or less and/or has been aged up to and no longer than 3 months. This preferably applies to a semi-hard cheese.

In an embodiment, the cheese of the invention is substantially free of added sugar, mono-or disaccharides (glucose, fructose, lactose, maltose, sucrose etc) and/or added starch or other polysaccharides, such as added fermentable, water soluble or water insoluble fiber.

In an embodiment, the cheese of the invention is a product of fermentation and/or involves at least one process step involving the exposure of the materials and/or ingredients making up the cheese to microorganisms, and possibly enzymes that metabolize and/or grow in presence of some or part of the ingredients. In other words, all or at least some of the cheese have preferably been fermented. In an embodiment, the microorganisms include one or more selected from bacteria, preferably including lactic acid bacteria, yeast and/or molds, preferably at least lactic acid bacteria and molds or spores. In an embodiment, molds may be added in the form of spores, the spores being from molds, for example.

In an embodiment, the cheese contains detectable DNA of said one or more selected from lactic acid bacteria, yeast and/or molds, which were used in fermenting said ingredients and/or contents of the cheese.

In some aspects and embodiments, the invention provides a method for producing a cheese or cheese substitute. In an embodiment, the method allows obtaining the cheese of the invention.

In a preferred embodiment, 10wt% or more of the proteinogenic content of the cheese is made from plant protein, preferably lupine protein, wherein more preferred percentages are disclosed elsewhere in this specification, for example in the context of the cheese of the invention.

In an embodiment, the method of the invention comprises one or more of the following:
- obtaining an aqueous extract of one or more plant material, wherein said aqueous extract comprises a proteinogenic content;
- adding a vegetal oil or fat to said aqueous extract to obtain a fat-supplemented liquid;
- homogenizing the fat-supplemented liquid to obtain a homogenized liquid;
- coagulating said homogenized liquid to obtain a coagulate;
- fermenting said coagulate and/or said homogenized liquid by exposing the coagulate and/or said homogenized liquid to one or more fermenting microorganisms and, optionally, enzymes, wherein the microorganisms are preferably selected from one or more of the group consisting of: bacteria, in particular lactic acid bacteria, yeast and/or molds;
- forming cheese or substitute cheese bodies from the coagulate comprising the microorganism,
- exposing the cheese bodies to a salt bath;
- aging said cheese bodies by repeatedly and/or continuously exposing at least part of an outer surface and/or rind of said cheese bodies to live microorganisms and/or storing said cheese bodies in conditions comprising a defined humidity, which conditions are preferably suitable to prevent drying out of said cheese bodies.

The term "liquid" is generally used herein to refer to a milk comprising plant material, preferably a plant-based milk. Preferably, the "liquid" comprises added plant fat and is thus fat-supplemented and/or fat-standardized.

In an embodiment, the method comprises providing a liquid comprising an aqueous extract of plants, for example lupine seeds (preferably lupine whole seeds) and/or other plant materials such as those disclosed in this specification.

In an embodiment, the aqueous extract contains 3-8wt%, preferably 4-7wt% and most preferably 4.5-6.5wt% of protein, 4-9wt%, preferably 4.5-7.0wt% and most preferably 5-6.0wt% of fat, 0.1-4wt% of fibers, and 0.4-1.2wt% of fermentable carbohydrates.

In some embodiments, the aqueous extract is a plant-based emulsion, suspension and/or solution. The extract may be obtained by crushing a plant material, such as seeds of the legume family, such as lupine, in the presence of water, or emulsifying and/or dissolving crushed plant material with water.

In case dried seeds, such as seeds of legumes (soybeans, chickpea, beans, lupine, etc) are used, the seeds are preferably soaked overnight before crushing the seeds and obtaining the aqueous extract. Preferably, the water used for soaking is removed and the seeds are washed, which helps removing bitter compounds if present, such as in lupine seeds.

Preferably, said plant material for obtaining said aqueous extract comprises 50wt% or more of legume seeds, preferably lupine seeds, preferably 60wt% or more, more preferably 70wt% or more, more preferably 80wt% or more, and most preferably 90 or 95wt% or more of legume seeds, preferably lupine seeds. In a preferred embodiment, said aqueous extract is an aqueous extract of lupine seeds, such as whole grain lupine seeds.

In a preferred embodiment, said aqueous extract also comprises carbohydrates, preferably one or more selected from starch, fiber, oligo- and/or disaccharides, which can serve as substrate for fermentation by said lactic acid bacteria. The carbohydrates may stem, for example, from said seeds of legume plants, such as lupine.

In an embodiment, the method comprises adding fat, preferably a plant fat, for example to the aqueous extract, in particular to the aqueous extract comprising crushed legume and/or lupine seeds as disclosed above.

In a preferred embodiment, the method comprises adding said plant fat to said aqueous extract in order to obtain said liquid.

The term "liquid" is preferably used herein to refer to the aqueous extract that is preferably fat-standardized by adding fat. This liquid may also be referred to herein as plant-based "milk", but the term liquid is used herein for distinguishing the term from exclusively dairy-based milk.

The invention envisages that a separate step of adding fat to the aqueous extract is absent, for example if fat is added to the plant material before or for obtaining said aqueous extract, such that the latter contains already fat. For example, plant material rich in fat, such as nuts and seeds, may be added to the plant material before extraction so as to obtain the liquid.

Vegetal fats have been disclosed in this specification. In this way, a liquid is obtained which may be used in further process steps. The liquid may thus be a fat-supplemented liquid and/or a fat-standardized liquid. Fat is preferably added to obtain a fat content that is suitable for obtaining a dairy cheese substitute, e.g. a plant-based cheese that has the same fat content as found in typical dairy cheeses. If sufficient fat is already naturally present from ingredients used for preparing the aqueous extract, then additional fat may not need to be added and in some embodiments is not added.

Fat is preferably added and/or present to have a fat content and/or a dry matter content of fat as found in the final cheese and as described above with respect to the cheese.

In an embodiment, said liquid comprises a proteinogenic content of 20 wt.% or more of the dry matter of said liquid and further comprises fat, preferably plant fat. Preferably, the proteinogenic content, in particular proteins, may be higher, for example 30wt%, 35wt% or more or even 45wt% or more. The percentages refer to the dry matter of the liquid.

Preferably, the dry matter of the liquid comprises 20wt% or more of fat, preferably 30wt% or more, more preferably 40wt% or more and most preferably 50wt% or more of fat, preferably vegetal fat.

In an embodiment, the method comprises homogenizing the liquid to obtain a homogenized liquid. Preferably, the fat-containing liquid is homogenized, so as to obtain an emulsion comprising the aqueous extract of the plant material in which the fat is at least partially emulsified. During homogenisation, the liquid is exposed at least once but possibly twice or more to a high pressure, such as 150-250 bars, for example, generally in a continuous process.

In an embodiment, the fat-containing, fat-supplemented and/or the homogenized liquid is preferably heat-treated or otherwise pasteurized and/or sterilized. Preferably, the heat treatment results at least in a certain reduction of the bacterial load, in particular of vegetative microorganisms that are present in the plant materials used for preparing the aqueous extract and/or the liquid.

In a preferred embodiment, the pasteurization is suitable to reduce the microbial load by at least 3 log, preferably at least 4 log and most preferably at least 5 log. These numbers preferably apply to microorganisms in the vegetative state.

The pasteurization and/or sterilization is preferably conducted before exposing said coagulate so said one or more fermenting microorganisms.

Instead of and/or in addition to a heat treatment, other treatments suitable to reduce bacterial load may be used, including pasteurization, sterilization, high pressure pasteurization (HPP), high pressure homogenisation (HPH), non-thermal pasteurizations, UV light treatment, such as thin-film UV light treatment, pulsed electric field (PEF) pasteurization, ultrasonication, centrifugation, filtration, for example. Treatments that are allowed for organic foods are preferred.

In a preferred embodiment, the pasteurization involves a heat treatment.

In an embodiment, the method comprises coagulating said liquid milk.

In an embodiment, the method comprises obtaining a coagulate of said liquid, preferably of said homogenized liquid and/or pasteurized/heat treated liquid. Preferably, a coagulate is obtained from the homogenized liquid.

This process step may also be referred to as clotting or curdling. Preferably, coagulation is induced after pasteurization. The coagulate may be obtained in various ways, including methods known in the art. Coagulation of the liquid may be achieved by exposing the liquid to coagulants. Typical coagulants include acid, such as citric acid, acetic acid (e.g. the addition of lemon juice or vinegar). Another coagulant is Glucono Delta Lactone (GLD). Another manner of coagulating the liquid is by adding coagulating enzymes. For example, proteases, such as cysteine endopeptidases (papain, ficain and/or bromelain) and serine proteases (subtilisin, alcalase), or cross-linking enzymes, such as transglutaminase, can be used for coagulation. Translglutaminase, for example, creates bonds between γ-carboxamide groups of the glutamine residue side chains of the proteins present in the liquid, or between a γ-carboxamide group and a primary amine, such as the one of a lysine side chain. Furthermore, there are coagulation methods traditionally used in the fabrication of tofu, for example, which comprise the addition of mineral salts, such as calcium sulfate (gypsum), and/or magnesium chloride (e.g. in the form of nigari) and heating the liquid containing the mineral salt.

As indicated above, both, pasteurization and coagulation may involve a heat treatment and may thus be conducted in a single step. Said in other words, the invention envisages that coagulating may be conducted by exposing the liquid to heat, thereby also pasteurizing said liquid, such that a separate and/or preceding pasteurization step may be absent.

The invention preferably comprises exposing the liquid or the coagulate to fermenting microorganisms. This comprises adding live fermenting microorganisms to the liquid or the coagulate. These live fermenting microorganisms are also known as starter cultures. In case heating is involved in coagulating (see coagulation with mineral salts), the coagulate is preferably let to cool down (or be actively cooled) to reach a temperature that allows fermenting microorganisms to grow. The fermenting microorganisms are preferably added after pasteurization and/or after coagulation.

In an embodiment, the fermenting, fermentation and/or fermenting microorganisms involves at least one bacterium, in particular at least one lactic acid bacterium (LAB). Such LAB are widely known in the preparation of fermented food products, including dairy ones. In an embodiment, one or more LABs may be selected from the genera of Lactococcus (Lc.), Lactobacillus (Lb.), Streptococcus (S.), Leuconostoc (Ls.), Bividobacterium (B.), Pediococus, Staphylococcus, and Lentilactobacillus, for example.

Exemplary and preferred LAB starter cultures for the purpose of the present invention may be selected from: Lactococcus lactis subsp. lactic, Lactococcus lactis subsp. cremoris, Lactococcus lactis subsp. hordniae, Lactococcus raffinolactis, Streptococcus thermophilus, Lactobacillus delbrueckii subsp. bulgaricus, Lactobacillus delbrueckii subsp. lactis, Lactobacillus helveticus, Lactobacillus casei, Lactobacillus rhamnosus, Lactobacillus plantarum, Lactobacillus fermentum, Lactobacillus paracasei, Lactobacillus brevis, Lactobacillus buchneri, Lactobacillus reuteri, Leuconostoc mesenteroides subsp. mesenteroides, Leuconostoc mesenteroides subsp. cremoris, Leuconostoc mesenteroides subsp. dextranicum, Leuconostoc lactis, Leuconostoc pseudomesenteroides, Leuconostoc miyukkimchi, Bifidobacterium animalis, Bifidobacterium longum, Bifidobacterium bifidum, Pediococcus pentosaceus, Pediococcus acidilactici, Staphylococcus xylosus, Lentilactobacillus parafarraginis, for example.

In an embodiment, the fermenting microorganisms involve at least one filamentous or multicellular fungus or mold. Exemplary and preferred molds for the purpose of the present invention may be selected from species of the genera Aspergillus (A.) and Rhizopus (R.), for example A. oryzae (Koji Mold), A. sojae, R. oligosporus, R. oryzae, and R. stolonifera, Penicillium Candidium, Penicillium roqueforti, for example. Mold may be added, preferably, in the form of spores of said molds. Molds are preferably added when the cheese is a typical mould cheese substitute and/or blue cheese substitute, such as a substitute of cheeses like Roquefort, St Agur and Gorgonzola. Furthermore, molds may also be used to provide have an impact on the texture of the cheese.

In an embodiment, the fermenting microorganisms involve at least one yeast. Yeasts are generally single-celled microorganisms classified as fungi. Exemplary and preferred yeasts may be selected from the genera Geotrichum, Debaryomyces, Kluyveromyces, Saccharomyces (Sac.), Candida (C.), Yarrowia, Kluyveromyces, Pichia (P.), Zygosaccharomyces, Torulaspora, Rhodotorula, Saccharomycopsis, and Brettanomyces, for example.

Exemplary and preferred yeast species may be selected from *Geotrichum candidum, Debaryomyces hansenii, Kluyveromyces lactis, Saccharomyces cerevisiae, C. zeylanoides, C. lipolytica, C. kefyr, C. catenulata, C. intermedia, Yarrowia lipolytica, Kluyveromyces marxianus, P. fermentans, P. membranifaciens, Zygosaccharomyces bailii, Torulaspora delbrueckii, Rhodotorula mucilaginosa, Sac. fibuligera, Sac. rosinii, Saccharomyces unisporus,* and *Brettanomyces bruxellensis,* for example.

In a preferred embodiment, the method of the invention comprises exposing said coagulate to two or more different microorganisms comprising one or more lactic acid bacterium and one or more yeast, said one or more LAB and yeast preferably being selected from the lists provided herein above.

In a preferred embodiment, the method of the invention comprises exposing said coagulate to three or more different microorganisms comprising one or more lactic acid bacterium, one or more yeast, and one or more mold. Preferably, said one or more LAB, yeast and mold are selected from the microorganisms listed above.

In a preferred embodiment, the method of the invention comprises exposing said coagulate to three or more different microorganisms comprising two or more different lactic acid bacteria and one or more yeast. Preferably, said two or more LAB and said one or more yeast are selected from the microorganisms listed above. Preferably, said two or more different LAB are selected from different genera listed above.

In a preferred embodiment, the method of the invention comprises exposing said coagulate to four or more different microorganisms comprising three or more different lactic acid bacteria and one or more yeast. Preferably, said three or more LAB and said one or more yeast are selected from the microorganisms listed above. Preferably, said three or more different LAB are selected from different genera listed above.

In yet another preferred embodiment, the method of the invention comprises exposing said coagulate to four or more different microorganisms comprising two or more different lactic acid bacteria and two or more yeast. Preferably, said two or more LAB and said two or more yeast are selected from the microorganisms listed above. Preferably, said two or more different LAB are selected from different genera listed above.

In another preferred embodiment, the method of the invention comprises exposing said coagulate to three or more different microorganisms comprising one or more different lactic acid bacteria, one or more yeast and one or more molds. Preferably, said one or more LAB, said one or more yeast and said one or more molds are selected from the microorganisms listed above.

In another preferred embodiment, the method of the invention comprises exposing said coagulate to four or more different microorganisms comprising two or more different lactic acid bacteria, one or more yeast and one or more molds. Preferably, said two or more LAB, said one or more yeast and said one or more molds are selected from the microorganisms listed above.

Preferably, when said coagulate is exposed to two, three, four or more microorganisms, the curd is exposed at least partly simultaneously to said plurality of microorganisms.

The fermenting microorganisms are preferably using the nutrients in the liquid for sustaining their growth and/or metabolic activity. Preferably, the microorganisms use, metabolize and/or ferment carbohydrates, proteins and/or fats that are present in the liquid. Preferably, the proteins and/or carbohydrates are present in and/or stem from the plant material that was used when preparing the aqueous extract. For example, the carbohydrates and/or proteins are preferably present in seeds of plants of the legume family, such as lupine seeds, of nuts, and/or of other plant material disclosed in this specification.

In a preferred embodiment, the method does not contain the addition of carbohydrates, in particular carbohydrates, such as starches, fiber, di- or monosaccharides that can be used as substrate by the microorganisms. Preferably, no separate carbohydrates are added. If carbohydrates are added, they are preferably added in minor amounts, for example 10wt% or less of all carbohydrates that are present in the liquid and/or coagulate, more preferably 5wt%, 4wt%, 2wt%, 2wt% or even 1wt% or less. As a consequence, the fermenting microorganisms preferably use the carbohydrates that are present in the plant material, such as seeds of the legume plants, such as lupine seeds.

In a preferred embodiment, fermentation by addition of selected microorganisms is conducted before pressing the cheese. In some embodiments, microorganisms are added after coagulation and before transferring the coagulate to the transfer of the coagulate to molds.

In an embodiment, the method of the invention comprises cutting the coagulate

Preferably, the coagulate is cut into smaller shapes for the purpose of obtaining cheese bodies and obtaining regular fermentation of the material of the coagulate. The cutting preferably may take place starting from 20-60 minutes from the onset of fermentation, for example on 30-45 minutes. Instead of time, the ideal viscosity may be determined and cutting takes place once the viscosity is achieved.

Cutting is preferably made with cutting equipment of traditional manufacturing of dairy cheese. The cutting intensity and/or the size of the cut pieces is preferably selected depending on the type of cheese to be obtained. For softer cheeses, larger pieces having average dimensions of about 15-45 mm are cut, while for semi-hard and hard cheeses comparatively smaller pieces having dimensions of 5-14 mm, preferably 5-10 mm are obtained. The cutting may result in the obtention of more or less regular shapes such as cuboids, cubes, and/or cylinders, for example.

Following the cutting process, the coagulate is preferably heated to 45°C-60°C to facilitate the removal of excess water from the coagulate. The heating may last from 5 to 90 minutes, preferably 10 to 60 minutes. Preferably, the temperature of heating does not inactivate the fermenting microorganisms and/or allows for the fermenting microorganisms to continue growing and/or fermenting the coagulate during subsequent steps.

In an embodiment, the method of the invention comprises forming bodies of said cheese or substitute cheese from said coagulate. The "bodies" may be "wheels", "truckles" and/or "loafs" known from traditional dairy cheese wheels. The cheese body may have any suitable and/or desired form and/or shape. The cheese bodies may be formed in any suitable way. It is an advantage of the invention that traditional equipment used typically for preparing bodies of dairy cheese may also be used for forming cheese bodies in accordance with the invention. In a preferred embodiment, the cheese or cheese substitute of the invention is in the form of a cheese body, optionally a cheese body that has been cut in smaller portions, as is conventionally the case with dairy cheeses, in particular hard and semi-hard cheeses.

In an embodiment, forming said bodies comprises transferring the coagulate to molds.

Preferably, said fermenting is conducted and/or continued while said coagulate is in said molds.

In an embodiment, the cut and heated coagulate is transferred to selected molds as soon as curd dewatering is observed due to heating after cutting as disclosed above.

The cheese bodies, for example traditional cheese wheel molds, known for forming dairy cheese bodies have the diameters of 250/300/400/600/800mm, and such molds may be used for the purpose of the present invention. The invention is not limited to the size and/or form of the molds, this implying, however, that existing equipment, including existing and/or traditional molds available from dairy technology, may be used for the invention.

The size of the cheese body is generally determined by the size of the mold used for preparing the cheese body.

Preferably, the coagulate that is transferred to the mold is left in the molds until the pH stabilizes around 4.3-5.9, preferably 4.5-4.9.

In an embodiment, the invention comprises actively adjusting pH to a desired value, for example a value as indicated above, preferably to a value of 4.8-5.6, more preferably 5-5.5.

The molds filled with the cut coagulate are preferably then kept at a temperature between 25-47°C to facilitate the transformation of sugars and/or other carbohydrates as the case may be, into lactic acid.

Preferably, the method of the invention comprises pressing.

In an embodiment, the method of the invention comprises exposing said coagulate in said molds to pressure to remove excess water.

Preferably, the cheese bodies are pressed by exposure to mechanical pressure while the coagulate is in the cheese molds. Preferably, at this stage, fermentation by said microorganisms still takes place and/or continues.

In an embodiment, the molds are pressed with mechanical pressure in the range of 0.1kg/cm² to 0.2kg/cm² for soft cheeses, 0.3kg/cm² to 0.5kg/cm² for semi hard cheeses and 0.5kg/cm² to 1.2kg/cm² for hard cheeses. The pressure is preferably selected within these ranges or otherwise so as to obtain a desired consistency of the cheese that will preferably be exposed afterwards to salting and/or ripening processes. Accordingly, pressing should result in the obtention of self-sustaining ("solid") bodies that can further be manipulated and/or transported when removed from the molds.

In a preferred embodiment, the method of the invention comprises exposing the cheese bodies to a salt bath, also referred to as brine solution. The overall salt bath step may also be referred to as the brining stage. Preferably, the salt bath takes place after pressing.

The salt bath preferably is based on water saturated with non-iodized salt added at about 10-20wt%. Additional components like calcium chloride may be included to maintain calcium levels and ensure the desired texture of the cheese body. Acidifiers might also be used to adjust the pH, optimizing microbial growth conditions and influencing the cheese's final taste and texture.

Preferably, cheese bodies are put into the salt bath for about 30 mins to 3 days, preferably 1 hour to 24 hours, depending on size and volume.

The salt bath preferably contributes to one or more selected from increasing flavor, developing the rind, regulating moisture, controlling ripening, inhibiting the growth of undesired microorganisms, such as bacteria and molds, and/or increasing preservation.

In a preferred embodiment, the method of the invention comprises aging said cheese bodies, preferably after exposing the cheese bodies to said salt bath.

Preferably, aging comprises exposing at least part of an outer surface of said bodies to live microorganisms. Preferably, the entire surface of the cheese bodies is exposed to said live ripening step.

Preferably, the outer surface is provided by a rind, and the rind is aged with the aging cheese, the aged rind being part of the cheese of the invention. Preferably, the rind develops with the aging of the cheese or cheese bodies.

Preferably, aging comprises storing said bodies in conditions suitable to prevent drying out of said bodies, thereby obtaining said cheese or cheese substitute.

In a preferred embodiment, aging comprises moving the cheese bodies to the designated ripening area where the cheese bodies preferably undergo a ripening step. The aging and/or ripening preferably leads to the final product, i.e. the cheese or cheese substitute of the invention.

The microorganisms used for aging and/or applied to the outer surface of the cheese bodies are not necessarily the same as those used for fermenting the coagulate and/or the liquid. In some embodiments, different microorganisms are used, i.e. different from the starter cultures.

In a preferred embodiment, the microorganisms for aging are selected from one, two or more selected independently from the groups consisting of: bacteria, preferably coryneform bacterias, molds and yeasts. Preferably, said coryneform bacteria are preferably selected from the group consisting of *Arthrobacter, Brevibacterium linens or Corynebacterium.* Said molds are preferably selected independently from the group consisting of *Penicillium camemberti, Penicillium roqueforti, Penicillium glaucum, Penicillium candidum,* and *Fusarium domesticum,* for example. Said yeasts are preferably selected independently from *Geotrichum candidum, Debaryomyces hansenii, Kluyveromyces lactis, Saccharomyces cerevisiae, Candida utilis, Candida lipolytica,* and *Yarrowia lipolytica.*

In some embodiments coryneform bacteria and molds are used. In some embodiments, yeasts and molds are used. In some embodiments, coryneform bacteria and yeasts are used. In some embodiments, coryneform bacteria, yeasts and molds are all used for aging, in particular by applying said microorganisms to the outer surface of the cheese bodies, preferably repeatedly, for example at defined intervals, which may change (generally become longer) during the ripening step.

In a preferred embodiment, the microorganisms are added to a sterile water solution containing 1-5wt% salt, the "aging solution". This solution again may inhibit undesired microorganisms and preferably is applied to prevent the cheese from drying out.

The aging solution may be applied to the outer surface of the cheese with a suitable cloth, brush, sponge or other tool suitable to apply a liquid. In a preferred embodiment, aging comprises brushing said shapes with an aging solution favoring ripening, preferably comprising said one or more microorganisms selected from the microorganisms listed above.

The brushing may be conducted using automated brushing equipment typically used in classical dairy cheese fabrication. Roboter systems for automatically brushing dairy cheeses are known.

Within the first about 1-4 weeks, for example about 14 days, these bodies are preferably daily exposed to the aging solution, preferably by brushing of the cheese bodies. The cheese bodies are preferably also turned on a daily basis.

After about 1-4 weeks, for example starting from about day 14, the cheese bodies are exposed every day to the aging solution, preferably by brushing as set out above.

Traditionally, cheese bodies are kept on wooden trays, but other storing locations and/or arrangements are not excluded by the invention.

In a preferred embodiment, the temperature and humidity for younger cheeses (≤ 1-3 weeks, e.g. about ≤14 days) are maintained between 12°C and 18°C with a relative humidity of 90-95%.

Older cheeses (> 1-3 weeks, e.g. about >14 days) are preferably kept at a lower humidity range, which reduces the need for frequent mechanical smearing and thereby lowers labor costs.

Aging generally results in a loss of water, such that the dry matter of the cheese preferably increases with aging.

After aging, cheese bodies may be packaged and/or commercialized for consumption.

The method of the invention is suitable to obtain cheeses and/or cheese substitutes of the same categories as dairy cheeses.

In an embodiment, the cheese or cheese substitute of the invention and/or obtained by the method disclosed herein is one or both selected from:
- a hard cheese and/or hard cheese substitute, and,
- a semi-hard cheese and/or a semi-hard cheese substitute, and,
- a soft cheese and/or a soft cheese substitute.

The type of the cheese to be obtained depends generally on some of the parameters of the methods and/or of the microorganisms used for fermenting and/or during aging. As previously disclosed such parameter include the dimensions of the pieces obtained by cutting the coagulate, the selection of the microorganisms used for fermenting, the size of the cheese molds and thus of the bodies to be obtained, the microorganisms used for aging, and possibly some of the raw materials used for preparing the aqueous extract and/or the type of fat added for fat supplementing obtaining the liquid.

The method of the invention allows for obtaining entirely plant-based and/or vegan cheeses or cheese substitutes. A surprising and advantageous aspect of the invention is that existing equipment used for producing traditional dairy cheese making may conveniently be used for manufacturing the cheeses of the invention. In other words, the existing profession and/or equipment that is used for producing traditional dairy cheeses may be used for preparing the cheeses of the invention, such that the method of the invention can be implemented in existing industry and/or manufacturing processes.

The invention also enables the preparation of partly plant-based and partly dairy cheeses. It is thus possibly to prepare cheeses with a plant based proteinogenic content and/or fat content, while retaining a various degree of dairy proteinogenic and/or fat content. This may be suitable for consumers that do not wish to rely entirely on plant-based products but still wish to contribute to reducing the ecologic and/or CO₂ burden of traditional cheese manufacturing. A cheese that is partly plant based is also a solution for a transition to entirely plant based cheeses or cheese substitutes.

For example, such a part-plant based, part dairy cheese may comprise 5wt% or more, preferably 10wt% or more, more preferably 15wt%, 20wt%, 25wt%, 30wt%, 35wt%, 40wt%, 45wt%, 50wt%55wt% 60wt% or more of plant-based nutrients. For example, these percentages may apply to the contents of the proteinogenic content of the cheese (just to make an example used the above number of 30wt%: 30wt% or more of the proteinogenic content is plant based), to the contents of the fat (e.g. 30wt% or more of the fat content is plant based), or to the combination of both, proteinogenic content and fat content taken each by itself (e.g. 30wt% or more of the proteinogenic and 30wt% of fat content is plant based), or taken in combination (i.e. 30wt% of all proteinogenic and fat content taken together is plant based, irrespective of how much in these 30wt% is fat and how much is protein).

The invention does not exclude and thus encompasses various variations and combinations of different plant-based proteinogenic content, plant-based fat content, dairy proteinogenic content and dairy fat content.

Herein below, examples of the invention are disclosed. These examples are for illustration only and are not intended to limit the scope of the present invention.

### Example

### Example 1: A plant-based semi hard cheese replicate based on lupin seeds

### Production of plant-based milk

Dried lupin seeds are soaked overnight, water is removed, and the soaked seeds are washed. The soaked seeds are crushed and in the presence of water. Insoluble fiber and other suspended solids are removed by filtering through a 180 micron filter.

### Fat standardization, homogenization and pasteurization

Plant fat is added to achieve a plant-based milk having a fat content of about 5.5 wt.%, similar to the fat content of cow's milk. While rapeseed oil is used in this example, other plant oils or fats and mixtures thereof may be used, as disclosed in the description above.

In this particular example, the aqueous extract based on whole lupine seed and added oil or fat comprises 5wt% of protein, 5.5wt% of fat, 1wt% of fiber and 0.8 wt% of native sugars.

As in case of traditional cheese production, the standardized plant-based milk (also referred to as "liquid") is subjected to homogenization at 180 bars, heated to 96-120° and then cooled to curdling temperature. The heating reduces bacterial load but at the indicated temperature also results in removal of beanie flavors due to the presence of lupins and denatures the proteins. The heating is adjusted to achieve a log 5 reduction of the vegetative microbial load.

The standardized, homogenized and heated plant-based milk is coagulated. In this example, transglutaminase is used for curdling. The milk is cooled to about 40° and 0.1wt.% of transglutaminase is added, wherein the percentage refers to the total weight of the milk. Instead of using transglutaminase, coagulation may be achieved using heat and calcium chloride as detailed in this specification.

Once a curd with desired firmness is obtained, it is cut into smaller pieces having an average size of about 10 mm.

Then the milk is heated to 65°C for about 30 minutes to facilitate water removal and inactivate the transglutaminase enzyme. Once the curd dewatering process starts under these conditions transfer to the cheese molds can start.

At this stage and after cooling the milk to 42°C, fermenting microorganisms are added. In this example, at least one lactic acid bacterium (*Lactococcus lactis*) and one yeast (*Saccharomyces cerevisiae*) are added. Other microorganisms or combinations thereof may be used, including mesophilic or thermophilic starter cultures. The selection of the microorganism is expected to have an impact on the taste of the final product, due to the particular enzymes they produce, and the skilled person will therefore select the microorganisms in accordance with the desired criteria in terms of taste.

In accordance with this embodiment, no sugars, such as mono- and disaccharides nor starches or other polysaccharides are added. Interestingly, the lupin seeds belong to plant materials that provide sufficient carbohydrates for enabling fermentation.

During fermentation, microorganisms will produce enzymes and other protein-based components that will break down lupine proteins into smaller peptides including free amino acids. The microbial enzymes themselves are proteins and thereby contribute to the amino acid profile of the cheese substitute to be obtained.

The curds comprising the fermenting microorganisms are transferred to traditional cheese molds using an impeller pump. In this embodiment, cheese molds having a diameter of 800mm and a height of 45mm are used.

The pH of the curds in the molds is allowed to stabilize at about 6 and are then kept at a temperature of 28-43°C to allow fermentation to go on from 8-16h depending on pressing time that can vary between 0.5h and 24h depending on the dry matter and size of the cheese for the transformation of sugars into lactic acids.

Using traditional cheese making equipment, the molds are subjected to mechanical pressures of 0.1-0 kg/cm² for achieving the texture, consistency and density typical for a dairy hard cheese. At this stage, the dry matter content is increased to about 40wt.%.

### Salting

In order to enhance flavor salt is added through a salt bath. The cheese are removed from the mold is put into the salt bath for 120 minutes for a cheese loaf with a diameter of 250mm and a height of 120mm.

A brine solution is prepared with water saturated with non-iodized salt (15wt.%), for assisting flavor enhancement, moisture regulation, and preservation of the cheese. Calcium chloride may be included to maintain calcium levels and ensure the desired texture. Acidifiers might also be used to adjust the pH, optimizing microbial growth conditions and influencing the cheese's final taste and texture. The brining stage develops the rind, controls ripening and also acts as a critical preservation step by inhibiting the growth of undesirable bacteria and molds.

### Aging

After the salt bath the cheese is moved to the designated ripening area where it undergoes a final ripening step. For the ripening step, selected live organisms such as yeast and *Brevibacterium linens* are added to a sterile water solution containing 1-5wt.% salt to inhibit unwanted bacteria and prevent the cheese from drying out. This culture solution is used as a starter culture to begin brushing the young cheeses with a cheese brush. Young cheeses are brushed and turned daily for the first 14 day. Older cheeses, from 14 to 120 days, are brushed once per week to maintain humidity and to remove unwanted molds or bacteria that could remove functionalities that have been occurred in the previous modification steps. Cheeses are traditionally kept on wooden trays to maintain humidity and prevent drying out. The temperature and humidity for younger cheeses are maintained between 12°C and 18°C with a relative humidity of 90-95%. Older cheeses are kept at a lower humidity range, which reduces the need for frequent mechanical smearing and thereby lowers labor costs.

During storage, the cheese lost 4% of its original wait, and therefore has a lower water content and is higher in protein than the initial cheese after pressing.

### Presence of free amino acids in the cheese

The profile of amino acids of overall protein and in the form of free amino acids in the cheese was determined for the cheese after 90 days of aging. The results are shown in Table 1 below:

**Table 1: Analysis of amino acids and protein development in exemplary vegan cheese**

| Compound | Fat-suppl. lupine milk | Pressed cheese | Cheese 90 days total AA (mg/kg) | Cheese 90 days free AA (mg/kg) | Percentage free of all of respective AA in cheese |
|---|---|---|---|---|---|
| Protein Total mg | 47100 | 166200 | 171600 | 11500 | 6.7 |
| Tryptophan | 300 | 1200 | 1300 | < 100 | - |
| Threonine | 1700 | 6100 | 6100 | < 100 | - |
| Isoleucine | 2100 | 7500 | 7800 | 1000 | 12.8 |
| Leucine | 3800 | 13100 | 14300 | 1800 | 12.6 |
| Lysine | 2200 | 8000 | 8200 | 200 | 2.4 |
| Methionine | 300 | 1000 | 1000 | < 100 | - |
| Phenylalanine | 2000 | 7000 | 7300 | 900 | 12.3 |
| Tyrosine | 2600 | 9200 | 8200 | 600 | 7.3 |
| Valine | 2000 | 7000 | 7500 | 800 | 10.7 |
| Arginine | 5100 | 15500 | 16300 | < 100 | - |
| Histidine | 1000 | 3300 | 3500 | 200 | 5.7 |
| Alanine | 1500 | 5800 | 6500 | 1100 | 16.9 |
| Aspartic acid | 4900 | 18800 | 18900 | 1100 | 5.8 |
| Glutamic acid | 10600 | 38300 | 38800 | 2800 | 7.2 |
| Glycine | 1800 | 6500 | 6900 | 600 | 8.7 |
| Proline | 1900 | 6700 | 7500 | 800 | 10.7 |
| Serine | 2600 | 8900 | 9000 | 100 | 1.1 |
| Cysteine | 700 | 2300 | 2500 | < 100 | - |
| Asparagine | | | | 400 | |
| Glutamine | | | | 900 | |

| | | | | | |
|---|---|---|---|---|---|
| Legend: AA = amino acids | | | | | |

In Table 1, the second column from the right shows free amino acids (mg of free AA per kg of cheese) in the cheese after aging the cheese for 3 months. The column left from that shows overall proteinogenic content ("total AA"). It can be seen that a substantial amount, namely 6.70 wt% of all amino acids and overall about 11.5g is present in free form, the remainder being thus present in other form, in particular proteins, polypeptides and oligopeptides. Surprisingly, many amino acids that contribute to the taste of the cheese are present in comparatively high amounts the desired free form, such as glutamic acid, leucine, isoleucine, phenylalanine, valine, tyrosine and proline. Aging for a longer time is expected to further increase the quantity of free amino acids and also to further decrease the water content.

### Organoleptic assessment of the obtained cheese

The cheese as obtained has a texture similar to a dairy-based semi-hard cheese, with a slight brittleness. It offers a nutty, cheesy aroma reminiscent of dairy semi-hard varieties, without any off, bitter, or undesirable flavors. Its color is a light orange, and small holes are present, resulting from protein breakdown that produce gases. The cheese has an aspect, mouthfeel and taste that resembles strongly that of dairy-based cheeses.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A cheese or cheese substitute comprising a proteinogenic content comprising free amino acids, and a fat content, wherein 50 wt.% or more of said proteinogenic content is derived from lupine and/or is lupine-based proteinogenic content, said cheese comprising an aged rind comprising live microorganisms.

2. The cheese or cheese substitute of claim 1, wherein said free amino acids are present at an amount of 7-300 g per kg of said cheese or cheese substitute, preferably 8-200 g, and most preferably 9-150g per kg of said cheese or cheese substitute.

3. The cheese or cheese substitute of claim 1 or 2, wherein said free amino acids provide at least 4.0 wt% of said proteinogenic content, preferably at least 4.5 wt%, more preferably at least 5.0 wt% or more, and most preferably 5.5 wt% or more.

4. The cheese or cheese substitute of any one of claims 1-3, wherein said proteinogenic content provides 8-40 wt.%, preferably 10-35 wt%, more preferably 12-33 wt% of said cheese or cheese substitute.

5. The cheese or cheese substitute of any one of the preceding claims, wherein said proteinogenic content comprises 1000 mg/kg or more, preferably 1500 mg/kg or more, more preferably 2000 mg/kg, even more preferably 2400 mg/kg or more, and most preferably 2600 mg/kg or more of free glutamic acid, and wherein preferably 3.5% or more of all glutamic acid of the cheese is present in the form of a free amino acid.

6. The cheese or cheese substitute of any one of the preceding claims, wherein said proteinogenic content comprises 800 mg/kg or more, preferably 900 mg/kg or more, more preferably 1400 mg/kg or more and most preferably 1500 mg/kg or more of free leucine and wherein preferably 6wt% or more of all leucine in the cheese is present in the form of a free amino acid.

7. The cheese or cheese substitute of any one of the preceding claims, wherein said proteinogenic content comprises 500mg/kg or more, preferably 600mg/kg or more, more preferably 700 mg/kg or more and most preferably 800 mg/kg or more of free isoleucine, and wherein preferably 6wt% or more of all isoleucine is present in the form of a free amino acid.

8. The cheese or cheese substitute of any one of the preceding claims, wherein said proteinogenic content comprises 450 mg/kg or more, preferably 500 mg/kg or more, more preferably 600 mg/kg, even more preferably 700 mg/kg or more, and most preferably 800 mg/kg of free phenylalanine, and wherein preferably 5.5 wt% or more of all phenylalanine is present in the form of a free amino acid.

9. The cheese or cheese substitute of any one of the preceding claims, wherein said proteinogenic content comprises free glutamic acid and one or more selected from free leucine, free isoleucine, and free phenylalanine at the quantities and preferably the preferred quantities as specified in claims 5-8.

10. The cheese or cheese substitute of any one of the preceding claims, wherein said proteinogenic content comprises one or more selected from free valine, free proline and free tyrosine, wherein said free valine, free proline and free tyrosine, if present, are independently present at 400 mg/kg or more, 400 mg/kg or more, and 300 mg/kg or more, respectively.

11. The cheese or cheese substitute of any one of the preceding claims, wherein said fat content provides 10-50wt.%, preferably 15-45%, even more preferably 20-40% of the cheese or cheese substitute, and/or wherein said fat content comprises 70 wt.%, preferably 80 wt.% or more and most preferably 90 wt.% or more of plant oil or fat.

12. The cheese or cheese substitute of any one of the preceding claims, which has a dry matter content of 45% or more and/or which has been aged for 3 months or more.

13. The cheese or cheese substitute of any one of the preceding claims, which is a vegan cheese or a vegan substitute for a dairy cheese, wherein said cheese or cheese substitute is preferably a hard cheese or a semi-hard cheese or cheese substitute.

14. The cheese or cheese substitute of any one of the preceding claims, which is a product of fermentation by one or more selected from: lactic acid bacteria, yeast and/or molds, and/or which contains detectable DNA of said one or more selected from lactic acid bacteria, yeast and/or molds.

15. A method for producing a cheese or cheese substitute comprising a proteinogenic content of which 50 wt.% or more is provided by lupine protein, the method comprising:
- providing a liquid comprising an aqueous extract of lupine seeds, wherein 10 wt.% or more of the dry matter of said liquid are provided by said proteinogenic content, and wherein said liquid further comprises plant fat;
- obtaining a coagulate of said liquid and fermenting said coagulate by exposing the coagulate to one or more fermenting microorganisms and/or enzymes, wherein said microorganisms are selected from lactic acid bacteria, yeast and/or molds;
- forming bodies of said cheese or substitute cheese from said coagulate;
- aging said bodies, including repeatedly and/or continuously exposing at least part of an outer surface of said bodies to live microorganisms and storing said bodies in conditions suitable to prevent drying out of said bodies, thereby obtaining said cheese or cheese substitute.

16. The method of claim 15, which comprises pasteurizing and/or sterilizing the liquid to reduce the microbial load by at least 3 log, preferably at least 4 log and most preferably at least 5 log, before exposing said coagulate so said one or more fermenting microorganisms.

17. The method of any one of claims 15-16, which comprises exposing said coagulate to two or more different microorganisms comprising one or more lactic acid bacterium and one or more yeast.

18. The method of any one of claims 15-17, wherein said proteinogenic content comprises 60 wt.% or more, preferably 70 wt.% or more, more preferably 80 wt.% or more and most preferably 90 wt. % or more of proteinogenic content originating from lupine protein.

19. The method of any one of claims 15-18, comprising homogenizing the liquid to obtain a homogenized liquid, wherein said coagulate is obtained from said homogenized and preferably heat treated liquid.

20. The method of any one of claims 15-19, comprising adding said plant fat to said aqueous extract in order to obtain said liquid.

21. The method of any one of claims 15-20, wherein forming said bodies comprises transferring the coagulate to molds and conducting said fermenting while said coagulate is in said molds, and exposing said coagulate in said molds to pressure to remove excess water.

22. The method of any one of claims 15-21, wherein said aging comprises brushing said shapes using a liquid comprising live microorganisms favoring ripening, preferably one or more microorganisms selected from Brevibecterium, for example *B. linens,* and yeast.

23. The cheese or cheese substitute of any one of claims 1-14 and/or the method of any one of claims 15-22, wherein said cheese or cheese substitute is one or both selected from:
- a hard, semi hard or soft cheese or cheese substitute, and,
- a plant-based and/or vegan cheese or cheese substitute.
